# EUROPEAN PATENT APPLICATION

(11) **EP 2 623 002 A1**
(43) Date of publication of application: **07.08.2013**
(21) Application number: 13153967.8
(22) Date of filing: 05.02.2013
(51) Int. Cl.: A47J 45/06

(54) **Temperature detecting device in a cooking container**

(30) Priority: 06.02.2012 IT MI20120151
(71) Applicant: Costa, Liberato, 80048 S. Anastasia (NA) (IT)
(72) Inventor: Costa, Liberato, 80048 S. Anastasia - Napoli (IT); Romagnani, Ugo, 42020 Vetto - Reggio Emilia (IT); Lorenzi, Sergio, 24049 Verdello-Bergamo (IT); Galletti, Davide, 23870 Cernusco Lombardone - Lecco (IT)
(74) Representative: Giuli, Maurizio Mario Galdino

(57) **Abstract**

A temperature detecting device in a cooking container (12), wherein the cooking container (12) comprises at least a handle (13) made integral with an edge area of a containment portion (14) of the container (12) by means of at least one reciprocal blocking element (15, 115), said device consisting of a shaped bracket (21) carrying a thermometer (27), wherein the shaped bracket (21) has at least one arc-shaped portion (22) which is interposed between the edge area of a containment portion of the container and the handle (13) and a portion (23), carrying the thermometer (27), which is situated above the handle (13). The at least one arc-shaped portion (22) has a curvature radius smaller than the curvature radius of the containment portion (14) to which it is connected. A spacer ring (19) is present between the shaped bracket (21) associated with the containment portion (14) of the container (12) and the handle (13).

## Description

The present invention relates to a temperature detecting device in a cooking container.

Specific cooking containers are used in the food-cooking field, such as frying pans, saucepans, skillets, baking tins and any other cooking container that has this function. This general term in any case indicates a cooking utensil in which food to be cooked must be brought to a certain temperature by heating. The cooking is effected by heating this container with a flame, by induction or conduction with the use of electric plates or the like.

It is known that numerous substances must be cooked below certain temperatures. In oils, for example, exceeding certain temperatures in the presence of oxygen leads to a considerable acceleration in the oxidation phenomenon of fats. This oxidation forms toxic compounds having a carcinogenic effect. In oils, in fact, exceeding the temperature called "smoke point" dramatically leads to this oxidation phenomenon, thus inducing the formation of substances harmful for the health of human beings.

For this reason, oils with a high "smoke point" are recommended, such as extra-virgin olive oil (about 210°C), with respect to sunflower oil (less than 130°C) or soybean oil (about 130°C).

Consequently, for health protection, unless absolutely necessary, it is recommended to keep the temperature of the frying pan below 170-180° C.

For other purposes, such as a reduced energy consumption or a reduction in the loss of liquids on the part of food, a cooking temperature of around 140°C is recommended.

Any "recommended temperature" indication is useless without having information on the temperature of a cooking container, such as a frying pan.

Measuring the temperature of a frying pan traditionally depends on the capacity of the operator (cook) in evaluating the temperature by observing the behaviour of the contents of the same frying pan. This form of temperature detection is therefore absolutely subjective and linked to the operator's capacity and experience.

In order to solve this problem, temperature gauges are present on the market, in the form of external probes, which can be used for the direct measurement of the temperature of the frying pan.

These gauges are not frequently used and represent a complication in food cooking processes.

Various devices have been developed in the field of saucepans, integral with the saucepans or handles and lids, conceived for providing information on the real cooking temperature.

The usefulness of a temperature detecting device for frying pans or other similar products depends on various fundamental characteristics, which are listed hereunder in order of importance:
- response speed in order to allow the operator to act promptly with a corrective action, such as, for example, reducing the heat supply to the pan, by reducing the heating flame;
- measurement accuracy, in the case of both an increase and reduction in temperature, in order to evaluate the sensitivity of a possible corrective intervention;
- precision for certain specific cooking modes.

The market offers either additional (external gauges) or integrated systems in the two single elements always present in a cooking container: the containment recipient and the handle or one of its components, such as for example the spacer ring situated between the handle and pan.

Some of these devices or containers incorporating them are illustrated in patents EP1411804 and EP1459667. These systems generally inform the user of a temperature increase, or when a certain threshold temperature has been reached, but they are relatively inaccurate with respect to the real temperature state of the container.

In these systems, the gauge reveals the temperature of an element of the handle (the ferrule for example) or a specific element added to the handle (EP1411804), which is generically indicated as "detector". The "detector" is considered as being an indicator reasonably proportional to the temperature of the pan and therefore representative, through specific calibration, of the temperature to be measured. This assumption, as will be shown further on, is the cause of various problems in the existing systems.

All the devices currently existing, in fact, have substantial defects commonly deriving from the operating logic itself, the limitations of some of the materials used for the detection (thermochromic paints having maximum temperature thresholds), and the design of the components.

US 2006/225502 A1 discloses a temperature detecting device in a cooking container having a thermochromic sensor produced with thermochromic pigments.

These substantial defects can be summarized as follows:
- measuring velocity, accuracy and precision under various conditions of use: a temperature increase of the detector has an extremely variable delay depending on the temperature increase rate of the pan, for example in the case of a low or high flame. The calibration of the measurement system is effected with a temperature-increase profile considered "average" and is not reliable in the case of significant deviations from this average.
- considerable inertia in the case of a reduction in the temperature of the pan, which is such as to make this type of information relatively unusable. Once a certain temperature has been reached, the detector does not accompany a possible decrease in temperature of the pan. The current systems must be "reset" (or cooled) before being able to give reasonably indicative new information on the temperature. In terms of usability, this means that the user, having been informed that a limit temperature has been reached, cannot know whether the corrective intervention effected (reducing the flame, for example) has brought the system to the correct conditions.

There are various reasons for these drawbacks.

First of all, the heat of the pan must be able to move freely and rapidly towards the detection area. During this transfer, the heat encounters obstacles consisting of limited contacts between the parts, section narrowing, mass of the device, conductivity of the material, greater or lesser thermal insulation of the various parts.

The result of these various factors leads to a delay of the detector in accompanying the temperature increase profile, causing a delay in the response of the detection system. In daily use, this delay can lead, for example, to the following undesirable situation: in a pan containing little oil and on a very high flame, there would be an extremely steep temperature rise and the temperature detector would indicate 180°C when the pan is already at 220°C.

The greater the delay, the greater the susceptibility of the system will be to this type of error.

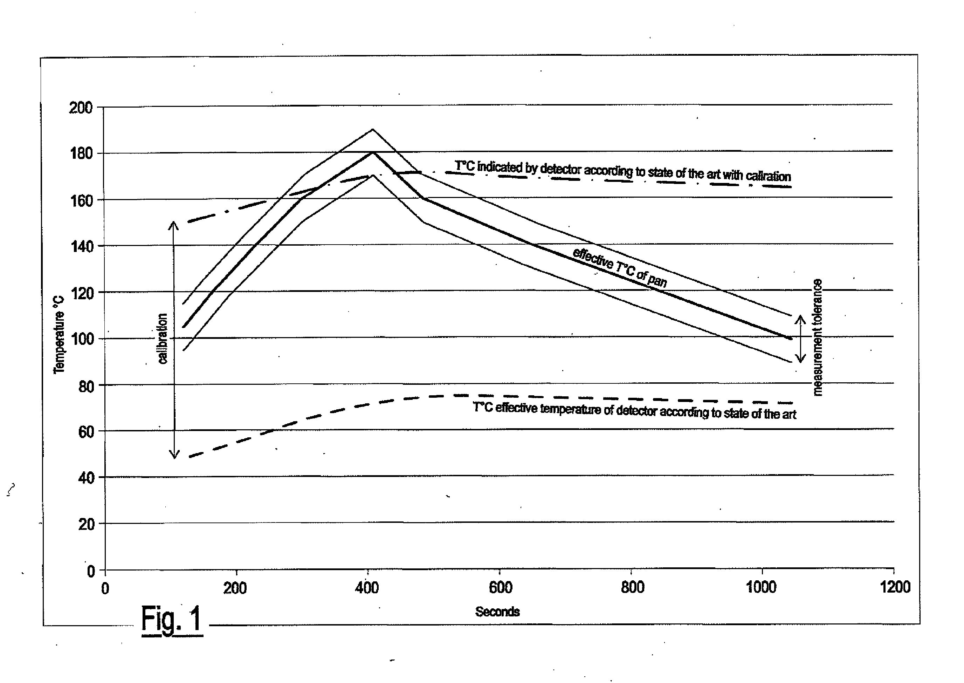

As a demonstration of a phenomenon of the type described, reference should be made to the diagram of figure 1, which shows the temperature trend of the pan and a device existing on the market in the presence of a heat source.

In the diagram, on the abscissa axis, the time necessary for a variation of 20°C in the temperature of the oil in a test pan containing oil, is indicated; the ordinate axis indicates the temperature revealed with thermocouples: of the oil in a pan and a temperature detecting device existing on the market, respectively.

In the experiment from which the diagram was drawn, the temperature of the pan was brought to 180°C. When 180°C was reached, the heating element (in this case the flame) was turned off, whereas the temperature detections continued.

The heating of a pan obviously causes a delay in the heating of the detecting device and consequent information for the user. This delay can be seen in the diagram, under the test conditions, in particular in the maximum temperature reached by the device which deviates considerably from the actual temperature of the pan.

Even if a delay in the detection can be considered acceptable, the devices produced according to the state of the art have another problem which has a strong impact on the effective usability and consequent usefulness of the temperature measurement system.

The existing systems, in fact, effect an estimate of the temperature of the pan, starting from a temperature of the detector that is much lower than that of the pan, but considered proportional.

This estimate is made through a calibration of the measuring device, which is set so as to indicate a temperature of 180°C, for example, when an actual temperature of the detector of 70°C (for example) has been reached.

The calibration of a temperature measurement instrument causes a shift in the temperature curve indicated with respect to the actual temperature revealed, as shown in the diagram of figure 1.

The diagram indicates the actual temperature of the pan with a tolerance range of +-10°C, considered acceptable by the user, and the temperature signalling curve of a device constructed according to the state of the art and subjected to a simple calibration.

It is evident that a simple calibration, with a consequent linear shift of the signaling curve with respect to the actual temperature of the detector, makes the measurement instrument much less usable (intersection between the measurement tolerance area and the signaling curve).

The trend of the detection curve, very different in form from that of the effective temperature of the pan, in particular in the temperature-descent part, drastically reduces the usefulness and possibility of a correct calibration and use.

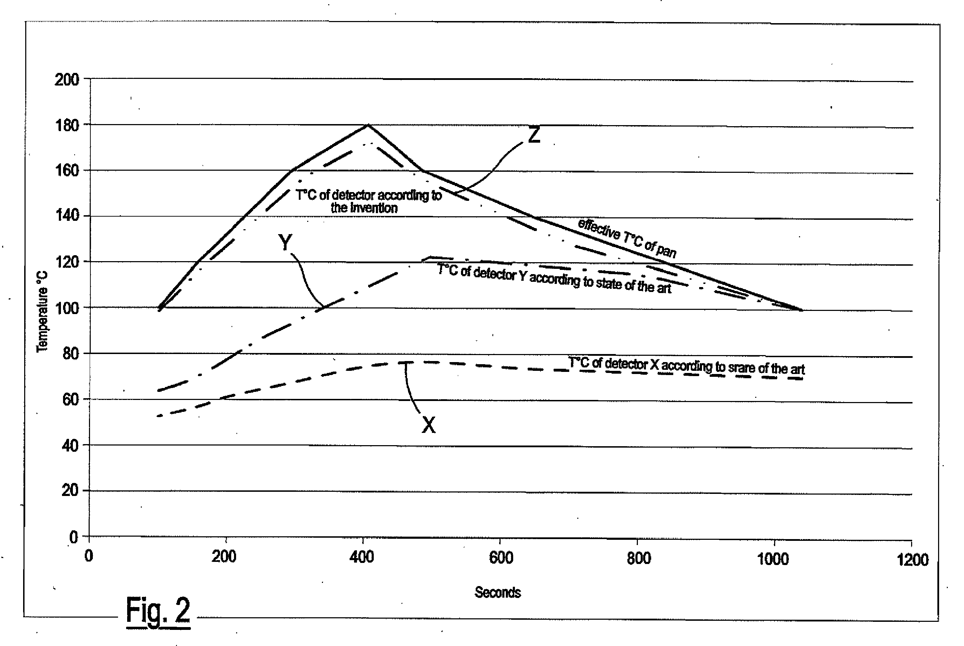

Figure 2 firstly shows a comparison of the temperatures indicated by two different detecting devices and a pan. A first device X uses very low effective temperatures, so as to be compatible with the use of reversible thermochromic paints, that have a much lower colour change temperature threshold with respect to 180°C (at the most around 100°C).

A device Y uses a different measurement system, but in any case shows a considerable response delay and marked resistance in following a temperature reduction of the pan.

The reason for this behaviour lies in the physical laws of heat transfer. From laboratory verifications, relating to existing products (for example the detector X with thermochromic paints), with respect to a temperature of the pan of 180°C, the detector on which the measurement is effected has an actual temperature of about 75°C.

Even with a calibration considered acceptable, in the case of a decrease in the temperature of the pan, the heat will always tend to flow from the hottest point (pan) to the point with the lowest heat (detector), consequently disregarding any relation of proportionality with the temperature of the pan.

It is therefore evident that any measuring device assembled on a support configured according to the state of the art is not capable of providing an accurate reading of the temperature of the pan, in particular in the decreasing phase, even macroscopic, of the temperature of the pan itself.

In daily use, this defect leads to the following exemplificative situation, confirmed by tests: the systems currently available indicate when a temperature of 180°C has been reached, but under certain conditions the pan tends to exceed this limit threshold, the user intervenes by promptly reducing the flame. The temperature of the pan drops and is brought to and maintained at 150°C; the measurement system continues to indicate 180°C for several tens of minutes, providing the user with erroneous information, with the result that he loses complete control of the temperature of the system, therefore contradicting the prerequisites for which the detector was introduced.

The only alternative for the user is to "reset" the measurement system by cooling it in some way, and waiting until it effects a new measurement.

In view of these problems, a general objective of the present invention is to solve the drawbacks of the known art described above in an extremely simple, economical and particularly functional way.

Another general objective of the present invention is to create a simple and effective device or system which is capable of accurately indicating the temperature of a container, regardless of the particular conditions for reaching the same, and also rapidly responding to variations in said temperature, either increasing or decreasing.

A further objective is to provide a temperature detecting device which can also be possibly applied to saucepans or similar containers already existing.

In view of the above objectives, according to the present invention, a temperature detecting device has been conceived in a cooking container, having the features specified in the enclosed claims.

The structural and functional features of the present invention and its advantages with respect to the known art will appear even more evident from the following description, referring to the enclosed drawings, which, among other things, show schematizations of embodiments of devices produced according to the same invention. In the drawings:
- figure 1 is a diagram showing the trend of the temperatures with time of a pan and a typical detecting device existing on the market in the presence of a heat source;
- figure 2 is a further diagram also showing the trend of the temperatures with time of a pan, of two devices existing on the market and a device according to the invention in the presence of a heat source;

- figure 3 shows a section of a first embodiment of a device according to the invention positioned in correspondence with a handle of the pan according to the line III-III of figure 4, both partially shown;
- figure 4 is a plan view from above of what is shown in figure 3;
- figure 5 shows an enlarged section of part of what is illustrated in figure 3;
- figures 6 and 7 are perspective views of the details shown in figures 3-5;
- figure 8 shows a view similar to that of figure 3 of a second embodiment of the device according to the invention;
- figure 9 shows a view similar to that of figure 3 of a third embodiment of the device according to the invention;
- figures 10 and 11 are perspective and plan views of the details shown in figure 9;
- figures 12, 13 and 14 are respectively a plan view from above, a section according to the line XIII-XIII of figure 12 and a front view of a bracket forming part of the device of the present invention in a first embodiment;
- figures 15, 16 and 17 are respectively a plan view from above, a section according to the line XVI-XVI of figure 15 and a front view of a bracket forming part of the device of the present invention in a second embodiment;
- figures 18, 19 and 20 are respectively a plan view from above, a section according to the line XIX-XIX of figure 18 and a front view of a bracket forming part of the device of the present invention in a third embodiment;
- figure 21 shows a perspective view of a further arrangement of the device of the invention in the case of a different connection of the handle to the pan;
- figure 22 shows a perspective view of a further arrangement of the device of the invention in the case of a direct connection to the pan;
- figures 23, 24, 25 and 26 show, the first a section view and the other three a perspective view, of how the fixing of a thermometer is effected in a device of the invention.

With reference to the figures in general, these illustrate a temperature detecting device, indicated as a whole with 11, positioned in a cooking container 12, in the example a frying pan, partially shown.

It should be pointed out that the term "cooking container" refers to frying pans, saucepans, skillets, baking tins and any other cooking container that has this function.

It can also be observed from the figures that the cooking container 12 has a handle 13 integral with the container in an edge area of a containment portion 14 of the container 12. The example shows only one handle, but two or more can also be envisaged. This constraint is obtained by means of at least one reciprocal blocking element, in the example schematized by means of a screw 15 positioned inside a threaded seat 16 of a stud 17 which extends externally from the wall of the container 12.

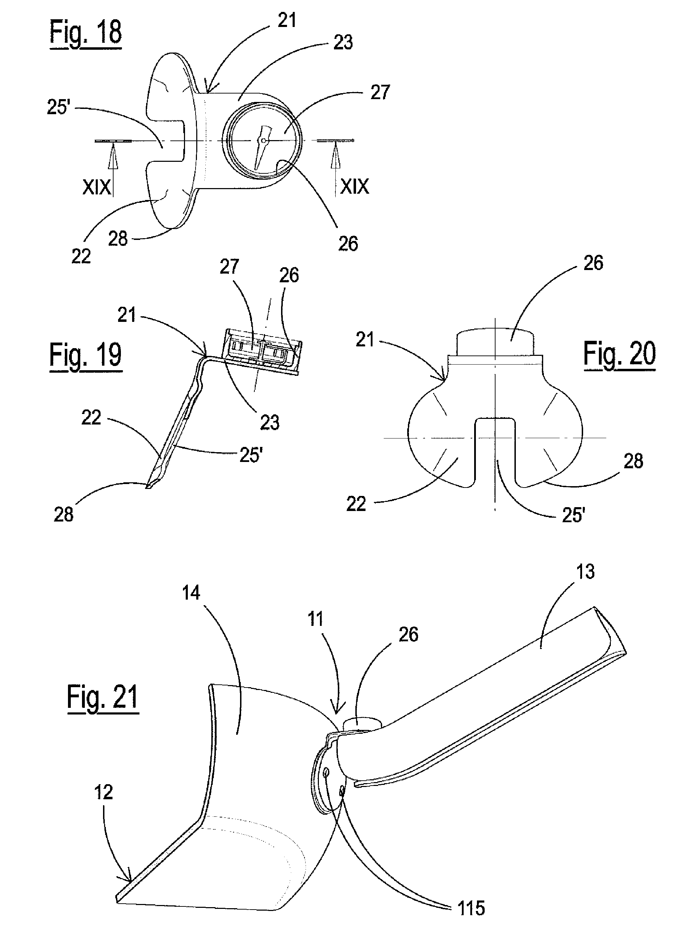

Figure 21 shows how the handle 13 can alternatively be made integral with the pan 12 by means of a pair of rivets 115 blocked at the containment portion 14 of the container or pan 12, once the device of the invention has been interposed between the wall of the container and the connection extension of the handle.

With reference to the arrangement of the previous figures, it can be observed that the screw 15 is also positioned inside a shaped seat 18 situated in the handle 13 blocking it with respect to the container 12.

In the example shown, there is also a freely removable spacer ring 19 positioned between the handle 13 and containment portion 14 of the container 12.

The device of the invention is positioned in this example between the spacer ring 19 and the outer wall of the containment portion 14 of the container 12.

The presence of the spacer ring 19 ensures that the contact surface between the outer wall of the container 12 and the handle 13, is increased. The force exerted by the screw 15 pushes the spacer ring, and a front portion 20 of the handle 13 to a precise contact between the parts. In this way a better measurement of the temperature is obtained.

The device of the invention comprises a shaped bracket 21 consisting of a lower arc-shaped portion 22 and an upper folded portion 23 with respect to the other portion 22 to allow the housing of a thermometer 27. The bracket 21 therefore has the function of supporting the thermometer and facilitates the measurement of the real temperature.

The lower portion 22 of the bracket 21 has been defined as being "arc-shaped" to indicate that it has a form that can be coupled with the side wall of the cooking container 12. It is therefore coupled with both a cylindrically-shaped wall and with an arc-shaped wall in both a perimetric direction with respect to the container and also a vertical direction with respect to the bottom of the container.

The shaped bracket 21 is made of a highly conductive metallic material, i.e. with a high temperature transmission, in order to facilitate its function, such as for example copper or alloys thereof. The shaped bracket 21 is, at the same time, also made of a highly deformable or yielding material which allows a suitable and immediate adaption to the surfaces it is required to collaborate with.

In the examples illustrated, the shaped bracket 21 is square-shaped and in its lower arc-shaped portion 22 there is a variably shaped window 25, 25' which allows its positioning with respect to the stud 17. The various figures show how the window can, for example, have a circular form 25 or an overturned U-shape 25' open towards the outside.

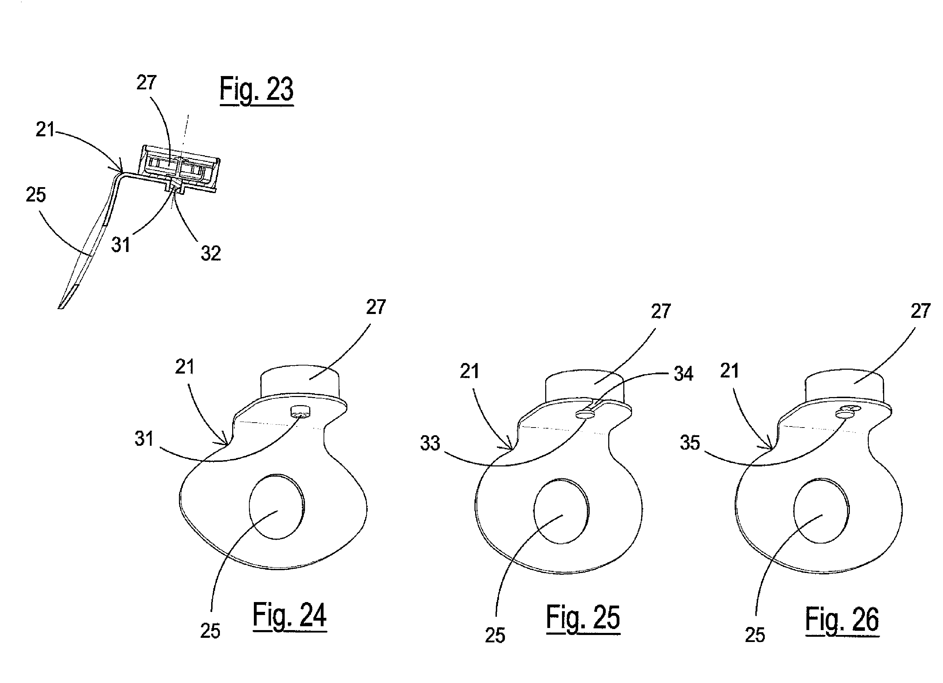

The upper folded portion 23 has a housing 26 which allows the stable positioning of a thermometer 27, for example of the bimetallic spiral type. The thermometer 27 can be applied to the bracket in its housing as shown for example in figures 23 to 26. In a first embodiment, the fixing is effected thanks to the presence of reciprocal constraining elements, such as a screw extension 31 screwed into a specific threaded seat 32 (figures 23 and 24). In another embodiment, the fixing is effected thanks to the presence of reciprocal constraining elements, such as an extension 33 of the thermometer 27 that can be positioned and hooked inside an aperture 34 situated in the bracket 21 (figure 25). In another embodiment, the fixing of the thermometer 27 is effected thanks to the presence of reciprocal constraining elements, such as a bayonet hook 35 (figure 26).

The lower arc-shaped portion 22 is interposed between the edge area of the containment portion 14 of the container 12 and the handle 13. The upper folded portion 23, which holds the thermometer 27, is positioned above the handle 13.

In general, the arc-shaped portion 22 advantageously has a smaller curvature radius than the curvature radius of the containment portion to which it is connected before assembly in the cooking container 12.

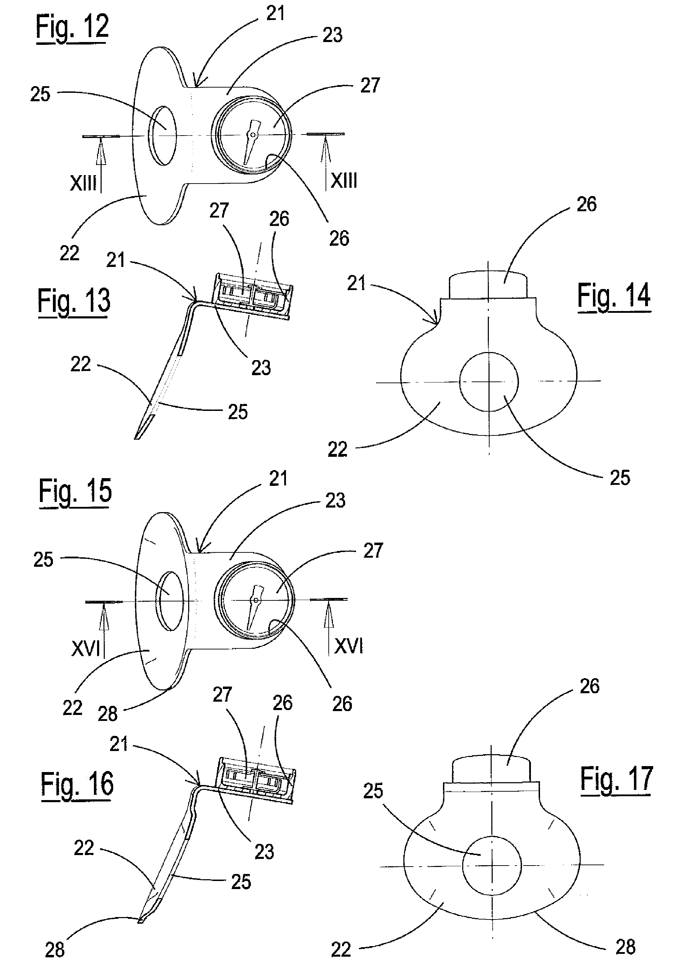

Figures 12, 13 and 14 respectively show a plan view from above, a section according to the line XIII-XIII of figure 12 and a front view of the shaped bracket 21 forming part of the device of the present invention in a first embodiment.

In this embodiment, the bracket 21 in its lower portion 22 has a form of the hemispherical type which facilitates a good coupling with the arched and rounded form of the wall of the containment portion 14 of the container 12.

Figures 15, 16 and 17 show a second embodiment of the bracket 21. In this case, the lower portion 22 has a form of the hemispherical type with a lowered perimetric edge 28. This other form ensures a good coupling with the arched and rounded form of the wall of the containment portion 14 of the container 12 when the bracket is tightened with respect to the handle and wall of the containment portion 14 of the container 12.

Finally, figures 18, 19 and 20 show a third embodiment of the bracket 21, similar to that of the second embodiment, but with the central part of the portion 22 not lowered and the window 25' having an overturned-U form open towards the outside.

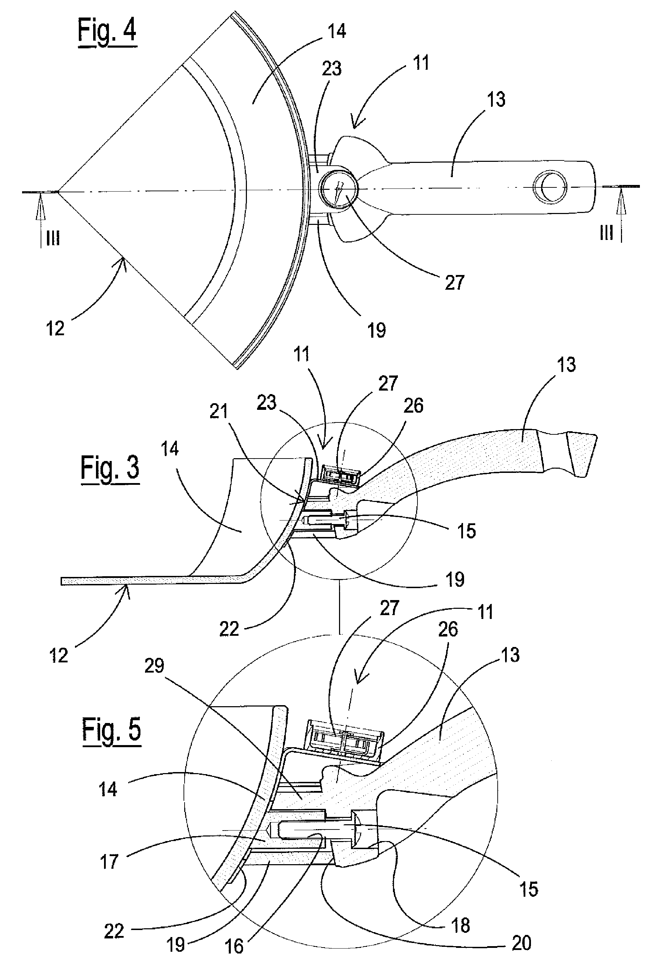

In the example shown in figures 3, 4, 5 and 6, the handle 13 has a front appendage 29 which is inserted in the space defined between the spacer ring 19 and stud 17. Said appendage in this example is shaped and hollowed so as to be coupled around the stud 17 and inside the spacer ring 19, with a shaped end for being perfectly buffered against the wall of the containment portion 14 of the container 12.

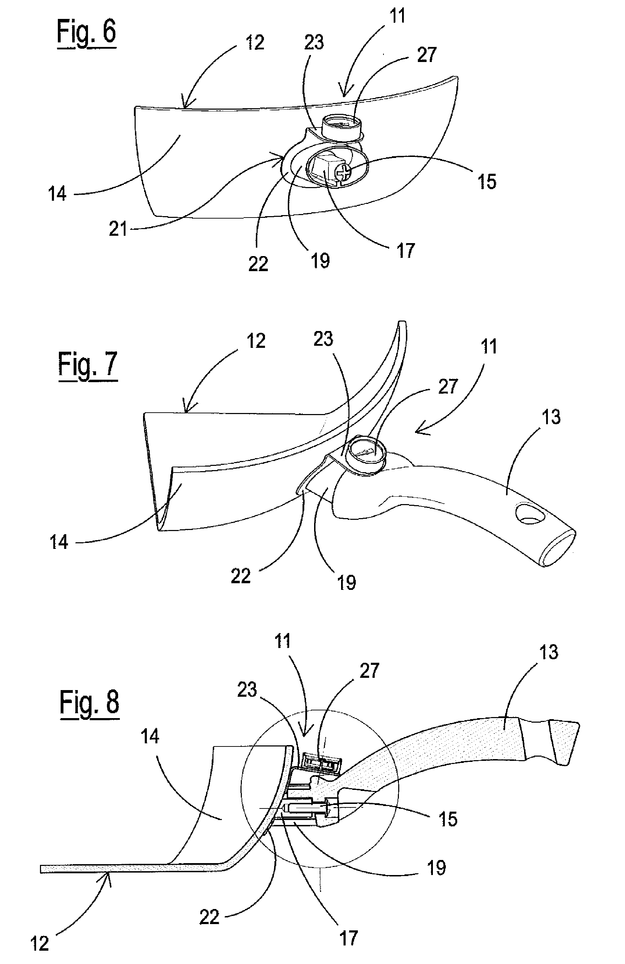

Figure 8 on the other hand shows how this appendage 29 of the handle 13 is not shaped in the front like the previous one, but has a smaller localized support.

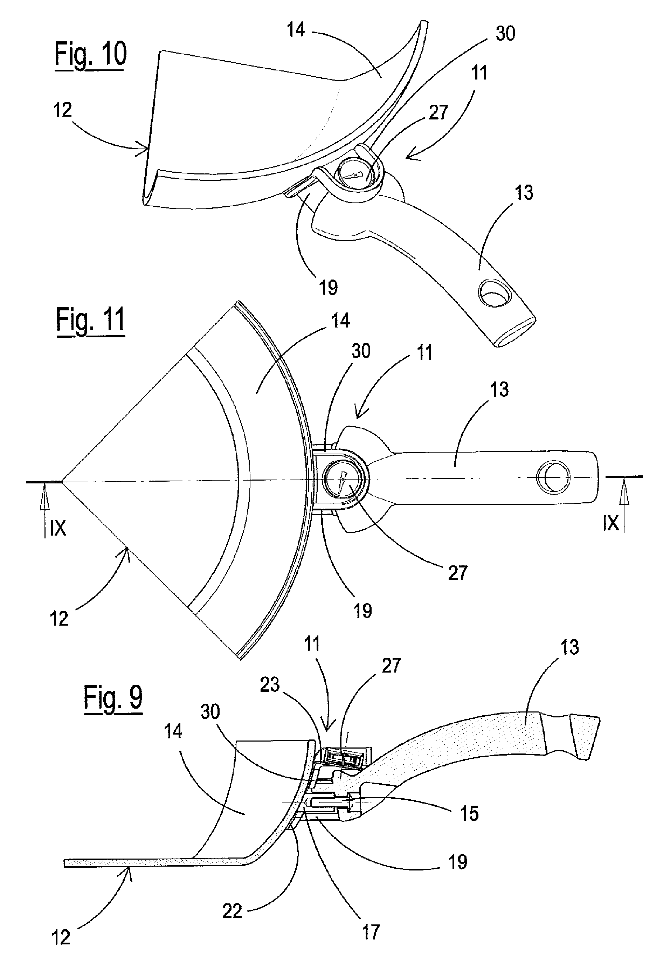

Figure 9 also shows how there can additionally be a shaped platelet 30 made of an insulating plastic material. This platelet 30 is interposed between the bracket 21, situated on the wall of the containment portion 14 of the container 12, and the spacer ring 19 which has received the front appendage 29 of the handle 13. This arrangement serves to further insulate the parts from each other, preventing the formation of a thermal bridge from the saucepan to the handle, providing an addition guarantee for the user and favouring a correct detection of the temperature on the part of the device of the invention. Said shaped platelet 30 envelops the upper portion 23 of the shaped bracket 21 above, and also the same thermometer 27, so as to avoid accidental contact on the part of the user and to prevent him from being burnt.

In this series of non-limiting examples, all the main features forming part of the present invention can be observed.

A device according to the present invention can advantageously be integrated in a cooking container, or in a handle, or it can be easily applied to a handle-pan coupling already existing.

The present invention therefore provides a detector capable of accurately copying the real temperatures of the container, such as a frying pan, by suitably positioning it and having features such as:
- a high contact surface between the detector and cooking container;
- a material having a high thermal conductivity;
- deformability which is such as to be able to accurately copy the surface of the containers having different curvatures (with the use of the tightening force of the screw of the handle);
- adaptability of form so that it can be easily applied to numerous types of containers and pans.

In particular, the device of the invention has a form with an extremely reduced mass and which favours direct contact with the pan. This results in a kind of shaped metallic bracket where a first front contact area overhangs from the spacer ring which pushes it with force against the pan. This is due to the fact that the spacer ring is tightened by the screw that grips the pan and pulls the handle guided by the spacer ring. This first front area, before application, is initially deep drawn with "a closed C". In this way, during the thrust of the spacer ring, or front portion of the appendage 29 of the handle 13, obtained by screwing the fixing screw of the handle, the device tends to be conformed and create the greatest possible contact, even with variably shaped containers or pans. An adequate temperature measurement system is then applied to said platelet, for example a bimetallic spiral thermometer.

In order to further improve the device, it is also possible to insulate the rear portion of the contact plate with the saucepan, with an insulating part, so as to reduce the distraction effect of the accurate temperature on the part of the spacer ring which is in contact with the plate. It can be seen that the plate is preferably made of copper in order to favour the heat transfer and also to become conformed for a better contact with the pan, and with variably-shaped pans, when pushed, and therefore shaped ad hoc, by the spacer ring.

The device operates perfectly even if integrated with the handle of the container. It should be pointed out, however, that in this embodiment, as it is required that the detector be as hot as the pan, there should be no risk of the user's hand, gripping the handle, being burnt.

This result is obtained by keeping the detector shielded by the handle and leaving only the interface of the thermometer revealing the temperature, visible. In this case, in order to overcome problems that could influence the accurate functioning of the device, i.e. not encountering dispersions on the part of the material of the handle, the device can be produced so as to integrate it with the handle but limiting the contact areas to the maximum, both with the spacer ring and the handle. This arrangement is obtained thanks to the insulating element which limits the contact between the spacer ring and the device, and also by allowing a gap between the device and the handle.

As can be seen in the diagram of figure 2, the use of a device constructed according to the present invention according to the line Z, allows a temperature curve of the detector to be obtained:
a. very close to the real temperature curve of the pan;
b. that is able to accurately copy the profile of the temperature increase and decrease of the pan.

Consequently, with a minimum and simple calibration of the measurement system housed on the detector produced according to the invention, these features allow a temperature indication curve to be obtained, which practically coincides with the real temperature curve of the pan.

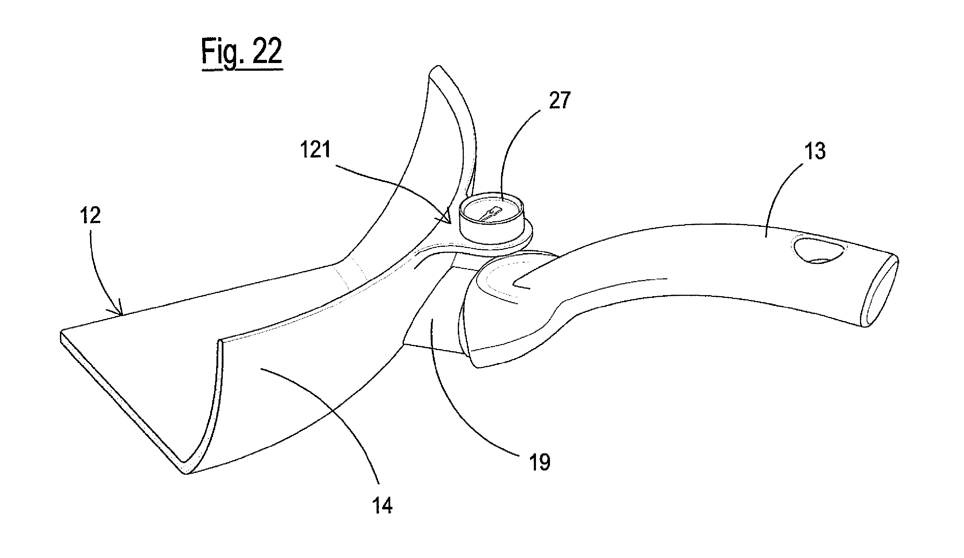

Figure 22 shows a perspective view of a further arrangement of the device of the invention in the case of direct connection to the pan. In this case, the bracket 121 is produced in a single piece with the container or pan as desired, or welded to the wall of the same, regardless of the arrangement of the handle. In this way, an extension is created towards the outside in the form of a bracket 121 carrying a thermometer 27.

The objective mentioned in the preamble of the description has therefore been achieved.

The forms of the structure for providing a measurement device of the position of the electrodes in an electric oven of the invention, as also the materials and assembly modes, can naturally differ from those provided for purely illustrative and non-limiting purposes in the drawings,

The protection scope of the present invention is therefore delimited by the enclosed claims.

## Claims

1. A temperature detecting device suitable for being positioned in a cooking container (12), wherein said cooking container (12) comprises at least a handle (13) made integral with an edge area of a containment portion (14) of the container (12) by means of at least one reciprocal blocking element (15, 115), said device consists of a shaped bracket (21) carrying a thermometer (27), wherein said shaped bracket (21) has at least one arc-shaped portion (22) which is interposed between said edge area of a containment portion of the container and said handle (13) and a portion (23) which is situated above said handle (13), **characterized in that** said portion (23) carries a thermometer (27).

2. The device according to claim 1, **characterized in that** said at least one arc-shaped portion (22) has a curvature radius smaller than the curvature radius of the containment portion (14) to which it is connected, before assembly in the cooking container (12).

3. The device according to claim 1 or 2, **characterized in that** a spacer ring (19) is present between said shaped bracket (21) associated with said containment portion (14) of the container (12) and said handle (13).

4. The device according to one or more of the previous claims, **characterized in that** said bracket (21) is made of a metallic material having a high temperature transmission.

5. The device according to one or more of the previous claims, **characterized in that** said bracket (21) is made of a highly deformable or yielding material.

6. The device according to one or more of the previous claims, **characterized in that** said thermometer (27) is of the spiral type.

7. The device according to claim 3, **characterized in that** said handle (13) extends into a front appendage (29) which is inserted in a space defined between said spacer ring (19) and a stud (17) which extends externally from the wall of the container (12).

8. The device according to claim 7, **characterized in that** said appendage (29) is shaped and hollowed so as to be coupled with said stud (17) and inside said spacer ring (19).

9. The device according to one or more of the previous claims, **characterized in that** it also comprises a shaped platelet (30) made of an insulating material which is interposed between the bracket (21) and the handle (13).

10. The device according to claim 3, **characterized in that** it also comprises a shaped platelet (30) made of an insulating material which is interposed between the bracket (21) and the spacer ring (19).

11. The device according to one or more of the previous claims, **characterized in that** said at least one arc-shaped portion (22) has a hemispherical-type form.

12. The device according to one or more of the previous claims from 1 to 11, **characterized in that** said at least one arc-shaped portion (22) has a hemispherical-type form with a lowered perimetric edge (28).

13. The device according to one or more of the previous claims, **characterized in that** said at least one arc-shaped portion (22) has a window (25, 25') for the passage of a stud (17) which extends externally from the wall of the container.

14. The device according to claim 13, **characterized in that** said window has a circular form (25).

15. The device according to claim 13, **characterized in that** said window has an overturned-U form open towards the outside (25').

16. The device according to one or more of the previous claims, **characterized in that** said thermometer (27) is of the bimetallic spiral type.

17. A cooking container (12) equipped with a handle (13) **characterized in that** it also comprises an external extension in the form of a bracket (121) carrying a thermometer (27).
